# EUROPÄISCHE PATENTANMELDUNG

(11) **EP 2 508 966 A1**
(43) Veröffentlichungstag der Anmeldung: **10.10.2012**
(21) Anmeldenummer: 11176626.7
(22) Anmeldetag: 04.08.2011
(51) Int. Cl.: G06F 3/044, G06F 3/041

(54) **Verfahren zur Erkennung von einem oder mehreren leitfähigen Gebieten**

(30) Priorität: 05.04.2011 EP 11161156; 05.04.2011 US 472018 P
(71) Anmelder: Printechnologics GmbH, 09112 Chemnitz (DE)
(72) Erfinder: Förster, Matthias, 01307 Dresden (DE); Köpcke, Johannes, 01067 Dresden (DE)
(74) Vertreter: Lange, Sven

(57) **Zusammenfassung**

Die Erfindung betrifft ein Verfahren zur Erkennung eines oder mehrerer leitfähiger Gebiete eines Informationsträgers mittels eines Berührungsbildschirms.

## Beschreibung

Die Erfindung betrifft ein Verfahren zur Erkennung eines oder mehrerer leitfähiger Gebiete eines Informationsträgers mittels eines Berührungsbildschirms.

Im Stand der Technik sind zahlreiche elektronische Geräte beschrieben, die einen berührungsempfindlichen Bildschirm (Berührungsbildschirm) aufweisen, der auch als Touchscreen bezeichnet wird und mit Fingern oder Eingabegeräten bedienbar ist. Touchscreens befinden sich heutzutage beinahe in allen Lebensbereichen. Durch ihre intuitive Bedienung erleichtern sie gerade dem unerfahrenen Benutzer das leichte Bedienen von technischen Geräten in der Alltagswelt und können zur Bedienung eines elektronischen Gerätes verwendet werden. Das heißt, sie finden neben der Anwendung im Alltag auch in der Industrie, in der Touchscreens zum Beispiel zur Steuerung von Maschinen Verwendung oder im Bereich der Spieleindustrie, bei welcher sie für Spielautomaten oder Arcade Games eingesetzt werden. Weitere Beispiele für Berührungsbildschirme umfassen Smartphones, Handys, Displays, Tablet-PCs, Tablet-Notebooks, Touchpad-Geräte, Grafiktabletts, Fernseher, PDAs, mobile Musikabspielgeräte, und/oder sonstige Eingabegeräte.

Ein Berührungsbildschirm kann auch Bestandteil von Eingabegeräten sein. Derartige Eingabegeräte werden unter anderem in Smartphones, PDAs, Touchdisplays oder Notebooks eingesetzt.

Allgemein versteht man unter einem Berührungsbildschirm, auch Tastschirm oder Sensorbildschirm genannt, eine auf dem Bildschirm angebrachte berührungssensitive Schicht, welche auf Kontakt des Benutzers mit seinem Finger oder einem je nach verwendeter Technologie geeigneten Zeigegriffel reagiert. Der Berührungsbildschirm ist ein Eingabegerät mit direkter Wirkung, das heißt die Eingabe erfolgt direkt auf dem angezeigten Raum, nicht abseits der Anzeige, wie dies beispielsweise bei Maus oder Tastatur der Fall wäre. Zudem erfolgt die Positionierung beim Touchscreen absolut, das heißt sie ist nicht abhängig von der vorhergehenden Position. Folglich bieten Touchscreens eine äußerst intuitive Bedienung, da der Bildschirm zugleich als Benutzeroberfläche dient und nicht der Umweg über externe Eingabegeräte gewählt werden muss.

Natural User Interfaces (NUI) oder "Reality Based User Interfaces" ermöglichen dem Nutzer eine direkte Interaktion mit der Bedienoberfläche eines Touchscreens durch Wischen, Tippen oder Berühren. Natürliche Benutzungsoberflächen wie Touchscreens sind berührempfindlich und reagieren auf Finger- und Handbewegungen. Man spricht in diesem Zusammenhang auch von gestenbasierter Bedienung. Durch die Entwicklung von Touchscreens haben sich die bisherigen Bedienmuster von grafischen Oberflächen (GUI) stark verändert. Während bisher künstliche Eingabegeräte, wie eine Tastatur oder eine Maus zur Interaktion nötig waren, genügt nun eine Fingerberührung. Smartphones, wie beispielsweise das Apple iPhone, aber auch Fahrkartenschalter oder Bankautomaten nutzen diese direkte Form der Bedienung.

Da das Berühren und Beeinflussen der virtuellen Objekte nahezu in gleicher Weise wie das realer Objekte funktioniert, fällt es Nutzern leicht, Handlungen aus dem Alltag in das digitale System zu übertragen. Durch Handlungen in der realen alltäglichen Umwelt können Parallelen zu den virtuellen Objekten gezogen und Handlungsweisen übertragen werden. Verschiedene vorbestimmte Interaktionsmöglichkeiten, sogenannte 'patterns', wie zum Beispiel das Skalieren, Verschieben und Drehen von Bildern oder das Scrollen von Informationen, erlauben es dem Nutzer mit dem Gerät und der Software direkt über das Interface zu agieren. NUI ermöglichen dem Menschen einen sehr viel natürlicheren Umgang mit Interaktionen und bedeutet eine Erweiterung des bisher beschränkten künstlichen Umgangs mit technischen Interfaces.

Unabhängig von der Technologie zur Registrierung eines Berührungspunktes (auch als "touch event", "Touch-Event" oder "Touchevent" bezeichnet), verwenden alle Touchscreen-Technologien als Grundlage ihrer Hardware drei verschiedene Bestandteile: Sensoren, Komparatoren und Aktoren. Sensoren registrieren Veränderungen des Systems und bestimmen durch ihre Empfindlichkeit und Reichweite die verwendbaren Interaktionen eines Multi-Touch-Screens. Multi-Touch-Screens haben die besonderer Eigenschaft, dass sie mehrere Touch-Events gleichzeitig verarbeiten können und so Multi-Touch Eingaben, d.h. mindestens zwei Touch-Events. Aufgabe der Komparatoren ist es, einen Zustandsvergleich durchzuführen. Der Zustand des Systems nach der Interaktion wird mit dem Zustand des Systems vor der Interaktion verglichen und der Komparator entscheidet, welche Auswirkungen die durchgeführten Interaktionen haben. Dies wird an die Aktoren weitergegeben und als tatsächliche Handlung ausgeführt. Sensortechniken kann man in die folgenden Technologien unterscheiden: Die Touchscreens basieren auf unterschiedlichen Wirkungsprinzipien, wobei die resistive und kapazitive Technologie am meisten verbreitet sind. Resistive Touchscreens bestehen aus zwei sich gegenüberliegenden, transparenten, leitfähigen ITO-Schichten (Indiumzinnoxid), welche durch zahlreiche isolierte Abstandshalter, so genannte "Spacer-Dots" voneinander getrennt sind. Die innere ITO-Schicht befindet sich auf einem festen Glasbildschirm, die äußere Schicht wird von einer flexiblen, kratzfesten Kunststofffolie geschützt. Mittels eines Steuergerätes wird an den leitfähigen Schichten Spannung angelegt, so dass auf der inneren Schicht ein Spannungsgradient in X-Richtung erzeugt wird, auf der äußeren Schicht ein Spannungsgradient in Y-Richtung. Sobald der Bildschirm berührt wird, wird die obere Schicht auf die darunter liegende gedrückt, somit ein elektrischer Kontakt hergestellt und damit die Spannung an dieser Stelle verändert. Der so genannte Controller berechnet anschließend entsprechend der anliegenden Spannung die X-Y-Koordinate des berührten Punktes.

Dahingegen wird bei der kapazitiven Technologie beispielsweise auf mindestens zwei räumlich voneinander getrennten Ebenen wie z.B. der Ober- und Unterseite einer Folie oder eines Glassubstrates jeweils eine Vielzahl von parallel zueinander verlaufenden Leiterbahnen aus leitfähigem Metall-Oxid aufgetragen. An den Kreuzungspunkten der horizontal verlaufenden Leiterbahnen der einen Ebene und den vertikal verlaufenden Leiterbahnen der anderen Ebene bilden sich Kapazitäten aus. Die elektrische Ansteuerung der Leiterbahnen einer Ebene erzeugt somit ein messbares Signal auf den Leiterbahnen der zweiten Ebene. Der Controller wertet anschließend die resultierenden Signaländerungen aus und kann somit die exakten Koordinaten der Berührung bestimmen. Neben einem Single-Touch sind auch Multi-Touch Erkennungen möglich, so dass mehrere Finger oder Eingabeelemente ein oder mehrere Touch-Events auslösen können.

Weiterhin sind noch Touchscreens bekannt, die eine Infrarot-Technologie, akustische Oberflächenwellen-Technologie oder dispersive Signal Technologie verwenden.

Im Stand der Technik ist jedoch nicht beschrieben, dass eine Interaktion zwischen einem Touchscreen und einem Informationsträger möglich sind. Es sind lediglich spezielle Eingabemittel beschrieben, mit denen die Eingabe auf dem Touchscreen vereinfacht wird.

Aufgabe der Erfindung ist es ein Verfahren bereitzustellen, wodurch Eingaben durch einen Informationsträger über einen Touchscreen Informationen zugeordnet werden können.

Gelöst wird die Aufgabe durch die unabhängigen Ansprüche. Vorteilhafte Ausführungsformen ergeben sich aus den Unteransprüchen.

Die Erfindung betrifft mithin ein Verfahren zur Erkennung von einem oder mehreren elektrisch leitfähigen Gebieten eines oder mehrerer Informationsträger, umfassend die folgenden Schritte:
a. Wenigstens bereichsweise in Kontakt bringen der leitfähigen Gebiete einer ersten Fläche eines oder mehrerer Informationsträger mit einer zweiten Fläche eines Berührungsbildschirms,
b. Auslösen von einem oder mehreren Touch-Events durch in Kontakt bringen gemäß (a) und
c. Ermitteln der Positionen, Orientierungen und/oder Ausdehnungen der Touch-Events.

Die Erfindung betrifft weiterhin insbesondere ein Verfahren zur Erkennung von einem oder mehreren elektrisch leitfähigen Gebieten eines oder mehrerer Informationsträger, umfassend folgende Schritte:
a. Wenigstens bereichsweise in Kontakt bringen der leitfähigen Gebiete einer ersten Fläche eines oder mehrerer Informationsträger mit einer zweiten Fläche eines Berührungsbildschirms,
b. Beeinflussung der elektrischen Größen des Berührungsbildschirms durch die leitfähigen Gebiete des Informationsträgers,
c. Auswertung der Rohdaten, RAW-Ansicht und/oder einer Matrix mit Pegeln aus der hervorgerufenen Beeinflussung.

Im Sinne der Erfindung bezeichnet ein in Kontakt bringen insbesondere, dass zwischen dem Informationsträger und dem Berührungsbildschirm bevorzugt kein Freiraum besteht. Das heißt, der Informationsträger ist bevorzugt mit dem Berührungsbildschirm in Berührungskontakt. Es kann jedoch auch bevorzugt sein, dass zwischen dem Informationsträger und dem Berührungsbildschirm kein direkter Kontakt besteht, sondern nur eine Annäherung vorliegt, welche ausreicht, um mindestens ein Touch-Event auf dem Berührungsbildschirm auszulösen. Dem Fachmann ist bekannt, dass bei einem Touchscreen bereits Touch-Events durch eine Annäherung ausgelöst werden können. Der Fachmann kann ohne großen experimentellen Aufwand feststellen, was im Sinne der Erfindung als Annäherung bezeichnet wird, da der Informationsträger ein Touch-Event auslöst, wenn er dem Berührungsbildschirm angenähert wird.

Vorzugsweise löst der Informationsträger mehrere Touch-Events auf dem Berührungsbildschirm aus. Durch die leitfähigen Gebiete, welche bevorzugt strukturiert auf dem Informationsträger vorliegen, werden bevorzugt definierte Signaländerungen auf einem Berührungsbildschirm erzeugt. Dabei werden die leitfähigen Gebiete insbesondere derart genutzt, dass sie durch in Kontakt bringen mit dem Berührungsbildschirm für den Controller auswertbare Signaländerungen hervorrufen (durch Überdeckung mit den Kreuzungspunkten der mehrlagigen Leiterbahnen innerhalb des Berührungsbildschirms werden Abweichungen vom Ruhezustand des Systems erreicht), welche von diesem als Eingabe erkannt werden. Anschließend wertet der Controller die resultierenden Signaländerungen aus und kann somit die exakten Koordinaten der Berührung bestimmen. Neben einem Single-Touch sind auch Multi-Touch Erkennungen möglich, so dass mehrere leitfähige Gebiete mehrere Touch- Events auf einem Berührungsbildschirm auslösen können.

Durch das erfindungsgemäße Verfahren ist es überraschenderweise möglich, die durch einen Informationsträger auf einem Berührungsbildschirm ausgelösten Touch-Events zu ermitteln und zu charakterisieren. Im Stand der Technik ist nichts dergleiches beschrieben, so dass das Verfahren ein neues technisches Gebiet betrifft. Die Charakterisierung umfasst beispielsweise die Interpretation der ermittelten Positionen, Orientierungen und/oder Ausdehnungen der Touch-Events allein oder als Gesamtheit. In weiteren Ausgestaltungen der Erfindung können diese Informationen informationstechnisch gezielt weiterverarbeitet werden.

Die Fläche des Informationsträgers wird im Sinne der Erfindung insbesondere als erste Fläche bezeichnet. Dem Fachmann ist bekannt, dass ein Berührungsbildschirm eine Fläche aufweist, über die Eingaben möglich sind. Diese Fläche wird im Sinne der Erfindung insbesondere als zweite Fläche bezeichnet und ist die Fläche, mit der die erste Fläche des Informationsträgers wechselwirkt.

Der Informationsträger ist vorzugsweise in räumlicher Nähe zu dem Berührungsbildschirm angeordnet. Eine räumliche Nähe bezeichnet im Sinne der Erfindung insbesondere, dass ein direkter Kontakt oder indirekter Kontakt zwischen dem Berührungsbildschirm und einem Informationsträger besteht und der Informationsträger oder Teile oder Bereiche dessen in funktionaler Wechselwirkung zum Berührungsbildschirm stehen. Diese Wechselwirkung kann durch verschiedene physikalische Wirkprinzipien oder Kombinationen derer erreicht werden, z. B. kapazitiv, induktiv, elektromagnetisch oder elektronisch. Die jeweilige Wechselwirkung hängt vom konkret vorliegenden Berührungsbildschirmtyp, d. h. von der Berührungsbildschirm-Technologie ab. Durch die Wechselwirkung der elektrisch leitfähigen Gebiete des Informationsträgers und den Elektroden des Berührungsbildschirms werden vorzugsweise die elektrischen Größen oder Eigenschaften des Berührungsbildschirms geändert. Im Sinne der Erfindung umfassen elektrische Größen insbesondere elektrische Feldstärke, Kapazität, Spannung, Strom und Widerstand ohne darauf begrenzt zu sein.

Durch die z.B. kapazitive Wechselwirkung wird vorzugsweise mindestens ein Berührungsereignis auf dem Berührungsbildschirm ausgelöst. Ein Berührungsereignis oder auch Touch-Event, Touchevent oder Touch-Ereignis genannt, bezeichnet im Sinne der Erfindung insbesondere ein Auslösen eines Ereignisses auf dem Berührungsbildschirm.

Durch das Verfahren ist es überraschenderweise erstmals möglich, Informationsträger, insbesondere kapazitive Informationsträger zu Datensätzen in einem informationsverarbeitenden System zuzuordnen, indem der Berührungsbildschirm genutzt wird um Informationen zu sammeln, welche dann weiterverarbeitet werden, um einen Wert zu generieren, welcher die Zuordnung in einem informationsverarbeitenden System ermöglicht. Überraschenderweise ist das Verfahren auf Single-Touch sowie Multi-Touch Ereignisse anwendbar.

Dem Fachmann ist bekannt, dass Mikrocontroller bzw. vergleichbare elektronische Schaltungen in Verbindung mit entsprechender Software genutzt werden, um die Position von Fingereingaben auf einem Touchscreen zu bestimmen. Durch die Fingereingabe, die ebenfalls durch einen kapazitiven Informationsträger simuliert werden kann, wird mindestens ein Touch-Event generiert. Die Erfindung nutzt nun überraschenderweise die Tatsache, dass z.B. geeignete kapazitive Informationsträger eine Korrelation von Positionen von Fingereingaben auf einem Touchscreen erzeugen, welche diese wiedererkennbar machen. Um diese Wiedererkennbarkeit zu erzeugen, werden die von dem bevorzugten Verfahren bereitgestellten Positionen der Touch-Events verwendet und in einer beliebig wiederholbaren Weise verarbeitet, sodass eine den ursprünglichen Informationsträger repräsentierende Struktur bestimmt werden kann. Es kann auch vorteilhaft sein, dass die Positionen, Orientierungen und/oder Ausdehnungen der Touch-Events zu einer Menge zusammengefasst werden. Eine Menge ist im Sinne der Erfindung insbesondere eine Zusammenfassung der auf dem Berührungsbildschirm ausgelösten Touch-Events zu einer Gesamtheit. Das Besondere an dem bevorzugten Verfahren ist, dass diese Struktur oder Menge für jeden Informationsträger bevorzugt immer identisch, oder mindestens jedoch ähnlich ist, wodurch eine Zuordnung oder zumindest eine Ähnlichkeit zu einem Datensatz in einem informationsverarbeitenden System bestimmbar ist.

Ferner kann es bevorzugt sein, dass eine Punktwolke aus den Positionen, Orientierungen und/oder Ausdehnungen der Touch-Events in Relation zueinander gebildet wird.

Es ist weiterhin bevorzugt, dass aus den Positionen, Orientierungen und/oder Ausdehnungen der Touch-Events ein Polygonzug gebildet wird. Ein Polygonzug bezeichnet im Sinne der Erfindung insbesondere eine Spur eines Weges, der sich aus endlich vielen Geradenstücken zusammensetzt. Weiterhin ist bevorzugt, dass der Polygonzug, die Menge der Touch-Events oder die Punktwolke einem Datensatz in einem informationsverarbeitenden System zugeordnet werden.

Vorteilhafterweise können die Touch-Events mittels Gerätetreiber, OS API und/oder Software API ermittelt werden. Das OS API ist das Programmierinterface welches vom Betriebssystem zur Verfügung gestellt wird. Das Software API ist das Programmierinterface, welches von einem Softwaresystem anderen Programmen zur Anbindung an das System zur Verfügung gestellt wird. Zusätzlich kann es bevorzugt sein, dass die Touch-Events mittels Software in einem Software API ermittelt werden.

Es kann jedoch auch bevorzugt sein, dass die Touch- Events mittels Software in einem OS API ermittelt werden.

Weiterhin kann es bevorzugt sein, dass die Touch- Events mittels Software durch einen Gerätetreiber ermittelt werden. Ein Gerätetreiber bezeichnet im Sinne der Erfindung insbesondere eine Schnittstelle zwischen Software und Hardware, d.h. im Wesentlichen einen Kommunikationskanal zwischen Gerät und Betriebssystem. Im hier vorliegenden weiteren Sinne versteht man zusätzlich auch die Möglichkeit, im Gerätetreiber tatsächliche "Software" im Sinne von Algorithmen oder allgemeiner Datenverarbeitung zu integrieren. Gleiches gilt für die Möglichkeit, eben solche Datenverarbeitung im Gerät selbst - bspw. dem sogenannten Touchcontroller - mittels Firmware auszuführen.

Bei einem WebAPI, als bevorzugte Form eines Software API, wird die Anwendung von einem Webserver geliefert und auf dem den Berührungsbildschirm beinhaltenden Gerät in einem Software API, bspw. einem Java-Script Interpretor des Webbrowsers ausgeführt. Es besteht damit vorteilhafterweise die Möglichkeit eine Trennung zwischen Auslieferung und Ausführung des Programms zu schaffen.

Ein Touch-Event kann im Sinne der Erfindung insbesondere als UITouch, UITouch-Objekt, UITouch-Event, NSTouch, NSEvent, NSTouch-Objekt, Touch (z.B. gemäß informationstechnischer Klassenreferenzen für gängige Softwareentwicklungsumgebungen) bezeichnet werden, also als die informationstechnische Repräsentation der Interpretation des Controllers, welche den Berührungsbildschirm elektrisch auswertet. Dieses UITouch-Objekt hat verschiedene Eigenschaften wie etwa eine X-Koordinate, eine Y-Koordinate, eine Längenausdehnung, eine Breitenausdehnung und eine Richtung der Ausdehnung.

Der Informationsträger umfasst vorzugsweise neben einem elektrisch nicht leitfähigen Substrat elektrisch leitfähige Gebiete, welche strukturiert angeordnet sein können. Es ist bevorzugt, dass der Informationsträger ein elektrisch nicht leitfähiges Substrat, ausgewählt aus der Gruppe umfassend Kunststoff, Papier, Karton, Holzwerkstoff, Folie, Verbundwerkstoff, Glas, Keramik, Leiterplattenmaterial, Textilien, Leder oder einer Kombination davon, umfasst. Das Substrat ist insbesondere ein elektrisch nicht leitfähiger Stoff, der vorzugsweise flexibel ist und ein geringes Gewicht aufweist. Es können lichtdurchlässige oder lichtundurchlässige Substrate verwendet werden.

Auf dem Substrat ist in einer Ausführungsform der Erfindung ein elektrisch leitfähiges Gebiet aufgebracht, wobei das Gebiet bevorzugt als Fläche oder als Struktur vorliegt. Die Form des Gebietes ist beliebig und kann in unterschiedlichen Ausführungen gestaltet sein. So können beispielsweise runde, eckige oder ovale Flächen oder Kombinationen auf dem Substrat vorliegen. Es können auch komplexe geometrische Formen realisiert werden oder mehrere einzelne Schichten oder insbesondere Gebiete miteinander kombiniert sein. Es kann bevorzugt sein, dass auf einem Substrat mehrere elektrisch leitfähige Gebiete aufgebracht sind. Vorteilhafterweise können Form, Orientierung, Anzahl, Ausrichtung, Abstand und/oder Position der Gebiete variieren.

Die elektrisch leitfähigen Gebiete sind bevorzugt eine Metallschicht, eine Metallpartikel enthaltende Schicht, eine elektrisch leitfähige Partikel enthaltende Schicht, elektrisch leitfähige Polymerschicht oder eine Schicht aus wenigstens einer Kombination dieser Schichten. Generell kann jedes Material verwendet werden, das elektrisch leitfähig ist. Des Weiteren können auch metallorganische Materialien, bestehend aus einer Verbindung aus Metall und Kohlenstoff verwendet werden. Metalle bezeichnen im Sinne der Erfindung insbesondere chemische Elemente, die sich im Gegensatz zu den Nichtmetallen im Periodensystem links der diagonalen Trennungslinie beginnend mit dem Element Beryllium (2. Gruppe) bis hin zum Polonium (16. Gruppe) befinden, sowie deren Legierungen und intermetallische Verbindungen (umfassend Laves-Phasen, Heusler-Phasen, Zintl-Phasen, Hume-Rothery-Phasen, NiTi, Co5, Nb3Sn oder Ni3Al) mit charakteristischen metallischen Eigenschaften. Metalle umfassen u. a. Aluminium, Blei, Chrom, Eisen, Gold, Indium, Cobalt, Kupfer, Magnesium, Mangan, Molybdän, Natrium, Nickel, Silber, Titan, Wolfram, Zink oder Zinn. Weiterhin können Metalloxide wie beispielsweise Indiumzinnoxid eingesetzt werden. Dies ist besonders vorteilhaft, weil es zwar elektrisch leitfähig ist, aber auch transparent und deswegen keine Fläche auf dem Berührungsbildschirm optisch abgedeckt wird.

Polymere bezeichnen im Sinne der Erfindung insbesondere eine Substanz, die sich aus einem Kollektiv chemisch einheitlich aufgebauter, sich in der Regel aber hinsichtlich Polymerisationsgrad, Molmasse und Kettenlänge unterscheidender Makromoleküle (Polymermoleküle) zusammensetzt. Die Polymere sind vorzugsweise elektrisch leitfähig. Bei solchen polymereinheitlichen Stoffen sind alle Makromoleküle bevorzugt gleich aufgebaut und unterscheiden sich lediglich durch ihre Kettenlänge (Polymerisationsgrad). Man kann derartige Polymere als Polymerhomologe bezeichnen. Polymere können aus der Gruppe umfassend anorganische Polymere, metallorganische Polymere voll- oder teilaromatische Polymere, Homopolymere, Copolymere, Biopolymere, chemisch modifizierte Polymere und/oder synthetische Polymere ausgewählt werden. Besonders bevorzugt sind Polymere ausgewählt aus der Gruppe umfassend Paraphenylen, Polyacetylen, Polypyrrol, Polythiophen, Polyanilin (PANI), PEDOT.

Elektrisch leitfähige Substanzen sind weiterhin insbesondere Ruß- oder Graphitpartikel. Ruß beschreibt eine Erscheinungsform des Kohlenstoffs, die sich bei unvollständiger Verbrennung bzw. thermischer Spaltung von dampfförmigen Kohlenstoff-haltigen Substanzen bildet. Ruß kann in pulverförmiger oder granulierter Form verwendet werden. Es können auch Ruß Präparationen, beispielsweise als flüssige, pastenförmige oder feste Ruß-Lösemittel-Konzentrate, in denen der Ruß gleichmäßig dispergiert ist, verwendet werden. Je nach Herstellungsweise und Rohstoff kann Ruß neben Kohlenstoff Wasserstoff, Stickstoff oder Sauerstoff enthalten. Ruß weist eine hervorragende Pigment-Eigenschaft, sowie eine Unlöslichkeit in allen Lösungsmitteln, Resistenz gegen die meisten Chemikalien, Lichtechtheit, hohe Farbtiefe u. Farbstärke auf. Graphit bezeichnet im Sinne der Erfindung insbesondere eine stabile Modifikation des Kohlenstoffs. Aufgrund eines schichtartigen Aufbaus ist Graphit ein guter elektrischer Leiter. CNT's (Carbon nano tubes) eignen sich in gleicher Weise zur Realisierung der leitfähigen Bereiche.

Die elektrisch leitfähigen Gebiete werden bevorzugt strukturiert auf das Substrat aufgebracht. Strukturiert bezeichnet im Sinne der Erfindung insbesondere, dass die elektrisch leitfähigen Gebiete das Substrat nicht vollständig, sondern nur partiell bedecken.

Der Informationsträger kann vorteilhafterweise an oder auf dem Berührungsbildschirm mit einer form-, kraft- und/oder stoffschlüssigen Verbindung befestigt werden, so dass mindestens ein elektrisch leitfähiges Gebiet mit dem Berührungsbildschirm in Kontakt oder zumindest räumlicher Annäherung steht, wodurch eine Wechselwirkung mit dem Berührungsbildschirm entsteht. Die Verbindung mit dem Berührungsbildschirm ist vorzugsweise reversibel ausgeführt. Das heißt, der Zustand vor der Herstellung der Verbindung kann wiederhergestellt werden, ohne dass das Eingabeelement oder der Berührungsbildschirm oder deren Umgebung bleibende Veränderungen erfahren. Das in Kontakt bringen wird besonders bevorzugt durch einen Nutzer, Bediener bzw. "User" hervorgerufen. Er bringt den Informationsträger zumindest so lange in Kontakt, wie es für die Durchführung des Verfahrens notwendig ist. Damit wird im Sinne der Erfindung ein Verfahren realisiert, bei dem die leitfähigen Gebiete in weniger als 30 Sekunden, bevorzugt kleiner 10 Sekunden und besonders bevorzugt kleiner 1 Sekunde erfasst werden können. Hierdurch ist eine schnelle und exakte Auslösung von Touch-Events möglich, wodurch weitere Verwendungen und Nutzungen von Berührungsbildschirmen möglich werden.

Es kann auch bevorzugt sein, dass das Substrat des Informationsträgers nach Klebezettelprinzip (z.B. Post-it Notes) oder sonstigen Haft-Klebestoffen an dem Berührungsbildschirm befestigt wird. Es ist ferner denkbar, dass weitere Elemente zur temporären oder dauerhaften Fixierung des Informationsträgers am Berührungsbildschirm zum Einsatz kommen. Denkbar sind alle Formen von Kleber (elektrisch leitfähig und elektrisch nicht leitfähig) oder Leimen, Gummis, Banderolen, Einschubhilfen, Klammern usw. Dies ermöglicht einen guten erfindungsgemäßen Kontakt zwischen Informationsträger und Berührungsbildschirm, eine fehlerfreie Bedienung, weil Abrutschen oder Verschieben verhindert wird.

Der mindestens eine Informationsträger wird mit dem mindestens einen Berührungsbildschirm in Kontakt gebracht, wobei der Kontakt statisch und/oder dynamisch sein kann. Dabei beschreibt ein statischer Kontakt, dass insbesondere im Moment der Auswertung des Informationsträgers keine oder eine unwesentliche Relativbewegung zum Berührungsbildschirm stattfindet. Im Gegensatz dazu beschreibt ein dynamischer Kontakt, dass insbesondere eine Relativbewegung während der Auswertung des Informationsträgers stattfinden kann. Der dynamische Kontakt kann auch beispielsweise ein Wischen oder eine sonstige dynamische Bewegung sein. Der Kontakt kann erfindungsgemäß auch eine Annäherung umfassen.

In einer besonderen Ausführungsform der Erfindung wird ein Verfahren bereitgestellt, wobei die ausgelösten Touch-Events mit Informationen wie X-Position, Y-Position, Breite, Höhe, Ausdehnung, elliptischer Ausdehnung, Durchmesser, Druck und Winkel durch deren Kombination für Kodierung, Korrektur und/oder Charakterisierung der Informationsträger genutzt werden.

Es ist weiterhin bevorzugt, dass das den Berührungsbildschirm beinhaltende Gerät ausgewählt ist aus der Gruppe umfassend Smartphones, Handys, Displays, Tablet-PCs, Tablet-Notebooks, Tochpad-Geräte, Grafiktabletts, Fernseher, PDAs, mobile Musikabspielgeräte und Eingabegeräte.

Vorteilhafterweise kann die Anordnung der leitfähigen Gebiete einem Datensatz in einem informationsverarbeitenden System zugeordnet werden. Daten bezeichnen im Sinne der Erfindung insbesondere Gebilde aus Zeichen oder kontinuierliche Funktionen, die aufgrund bekannter oder unterstellter Abmachungen Informationen darstellen, vorrangig zum Zweck der Verarbeitung und als deren Ergebnis. Die Daten oder Informationen sind (maschinen-) lesbar und -bearbeitbar und sind zur Kommunikation, Interpretation oder zur Verarbeitung nutzbar. Dem Fachmann der Informatik ist bekannt, was mit dem Begriff "Daten" bezeichnet wird. Ein Datensatz bezeichnet insbesondere eine zusammengesetzte Einheit von Daten bzw. Datenfeldern.

In einer bevorzugten Ausführungsform wird mindestens ein Touch-Event einem Datensatz oder mehreren Datensätzen in einem Datenverarbeitungssystem zugeordnet, wobei sich der Datensatz verändert bzw. die Datensätze verändern. Vorteilhafterweise kann mindestens ein Touch-Event einer Aktion eines Datenverarbeitungssystems zugeordnet werden oder diese auslösen. Diese Aktion trifft insbesondere auf nicht-vernetzte Datenverarbeitungssysteme und besonders bevorzugt auf vernetzte Datenverarbeitungssystemen zu. Hierbei kann es bevorzugt sein, dass die Anordnung der leitfähigen Gebiete alleine und/oder in Kombination mit Informationen im OS API in einem informationsverarbeitenden System Aktionen auslöst. Dies kann beispielsweise ausgeführt werden, indem ein im Grundzustand eines informationsverarbeitenden Systems beispielsweise bei der Darstellung des sogenannten Homescreens bzw. Desktops, zur Laufzeit ein Prozess die Eingabe überwacht und nur im Falle der Erkennung eines Informationsträgers ein vordefiniertes Programm ausführt. Eine Erkennung einer Eingabe mittels eines Informationsträgers wird beispielsweise und ohne darauf beschränkt zu sein realisiert, indem als Informationen aus dem OS API alle typisch menschlichen Eingaben, wie beispielsweise Tippen, Zeigen, Wischen oder eine sogenannte "pinch-to-zoom"-Geste ignoriert werden und die Restmenge der Eingaben als Informationsträger, beispielsweise durch eines der genannten Verfahren, interpretiert wird.

Es hat sich weiterhin gezeigt, dass durch bestimmte Eigenschaften der Touch-Events unterschieden werden kann, ob ein Touch-Event von einem Menschen oder von einem Informationsträger ausgelöst wurde. Es kann durch Prüfung der Konstanz der Geometrie eines Touch-Events feststellbar sein, ob diese durch eine menschliche Hand nachgeahmt wurde oder durch einen Informationsträger, dessen Geometrie immer konstant bleibt. Es kann durch einen Aufbau aus unterschiedlichen Punktgrößen geprüft werden, ob ein Touch-Event von einem Informationsträger erzeugt wurde, indem die Auftrittswahrscheinlichkeit der Touch-Events gegeneinander verglichen wird.

Weiterhin kann der Berührungsbildschirm in unterschiedliche Teile aufgeteilt werden, wobei die Bereiche oder Teile bevorzugt einer oder mehreren Funktionen zugeordnet werden. Beispielsweise kann ein Bereich Informationsträger lesen, während ein anderer ausschließlich Fingereingaben akzeptiert. Außerdem kann der gleiche Informationsträger auf unterschiedlichen Bereichen unterschiedliche Aktionen aufrufen.

Die Erfindung soll im Folgenden anhand von Beispielen und Figuren erläutert werden, ohne jedoch auf diese begrenzt zu sein. Es zeigen:
- Fig. 1A-D u. Fig. 2: Bevorzugtes Verfahren zur Ermittlung von Touch-Events
- Fig. 3: Weiteres bevorzugtes Verfahren zur Ermittlung von Touch-Events
- Fig. 4: Weitere Eigenschaften eines Touch-Events
- Fig. 5: Erstellung einer charakteristischen Zuordnung
- Fig. 6: Weiteres Beispiel zur Generierung der charakteristischen Zuordnung
- Fig. 7, Fig. 8: Beispiel eines Auslösen einer Aktion
- Fig. 9: Aktivierung einer Aktion durch eine Kombination mit einem Informationsträger
- Fig. 10: Informationsfluss bei der Zuordnung von Informationsträgern zu Werten in einer Web-Application

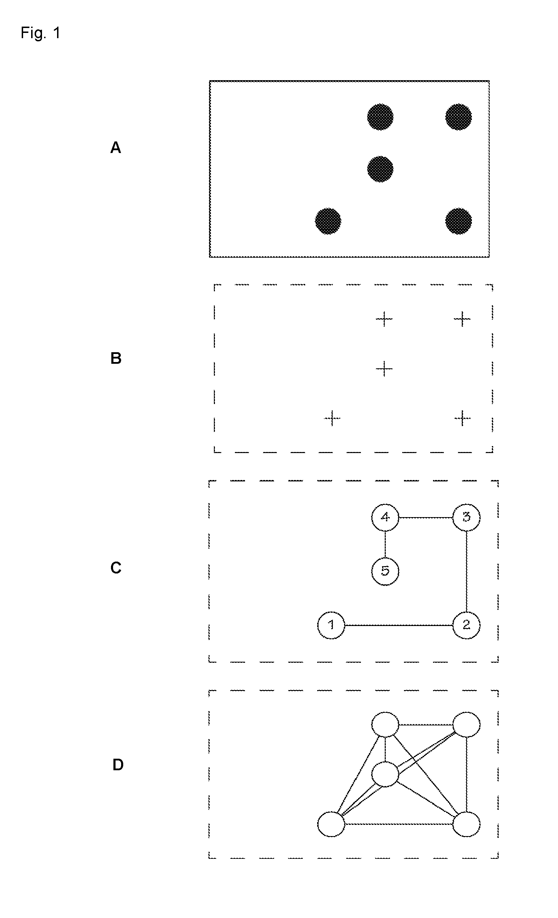

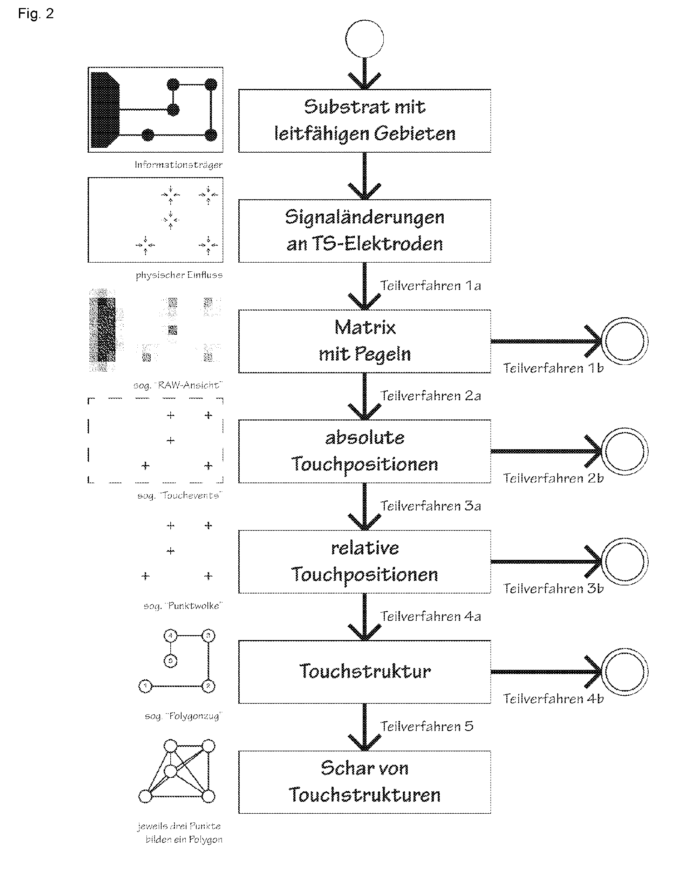

Fig. 1A-D und Fig. 2 zeigen ein bevorzugtes Verfahren zur Ermittlung und Charakterisierung von Touch-Events. Fig. 1A zeigt einen kapazitiven Informationsträger. Hierbei seien die Kreise auf dem Informationsträger leitfähige Bereiche welche vom Touchscreen als Fingereingaben oder Touch-Events erkannt werden. Touchpositionen haben im Wesentlichen die Eigenschaften der X-Position und der Y-Position. Zusätzlich können diese weitere Eigenschaften wie Durchmesser und elliptische Ausdehnung haben.

Touchpositionen sind an ein Koordinatensystem gebunden. Die Informationen bezüglich der Touch-Events können beispielsweise mittels Software von einem Gerätetreiber, einem OS API oder einem Software API stammen. Bevorzugt ist zudem, dass diese Software ein API zur Verarbeitung von Toucheingaben eines Betriebssystems oder eines Browsers ist.

Dargestellt in einem geeigneten Koordinatensystem sieht die durch den Informationsträger erzeugte Korrelation der Fingereingaben wie Fig. 1 B aus. Ohne ein Koordinatensystem stellt die Korrelation der Touch-Events eine Punktwolke dar, die bereits für den Informationsträger charakteristisch ist. Eine Punktwolke ist dadurch definiert, dass bestimmbar ist in welcher Beziehung die Punkte zueinander stehen. Diese Beziehung ist vollkommen unabhängig vom Bezugssystem. Eine Punktwolke kann hierbei beliebig gedreht und skaliert werden.

Beispielsweise kann der arithmetische Mittelpunkt der Struktur bestimmt werden und damit auch die Fingereingabe oder das Touch-Event ermittelt werden, welches am weitesten von diesem entfernt ist. Diese Position einer Fingereingabe sei der erste Punkt der wiedererkennbaren Struktur. Nun werden ausgehend von der Richtung vom arithmetischen Mittelpunkt in Richtung erster Punkt der Struktur, beginnend vom ersten Punkt als Zentrum polarer Koordinaten in mathematisch positiver Drehrichtung der nächste Punkt bestimmt.

Dies sei der zweite Punkt. Jetzt wird in mathematisch positiver Drehrichtung ausgehend von der Richtung vom zweiten zum vorherigen mit dem Zentrum polarer Koordinaten beim zweiten Punkt nach dem nächsten Punkt gesucht. So wird der dritte Punkt bestimmt. Dieser letzte Schritt wird wiederholt bis alle Punkte gefunden werden. Bereits gefundene Punkte werden in den jeweilig folgenden Schritten nicht mehr berücksichtigt. Als Ergebnis erhält man einen Polygonzug wie beispielsweise in Fig. 1C dargestellt. Ein Polygonzug ist eine Abfolge der Richtungen und Längen zu den nachfolgenden Punkten. Hierbei kann, ausgehend von einem Punkt, der gesamte Polygonzug allein durch relative Angaben konstruiert werden. Diese Struktur kann nach den obigen Schritten auch als Abfolge von Richtungen und Entfernungen beschrieben werden. Diese sind in diesem Beispiel: Entfernung 40 mm, Winkel 90°, Entfernung 32 mm, Winkel 90°, Entfernung 24 mm, Winkel 90°, Entfernung 16 mm und können als Abfolge 40-90-32-90-24-90-16 bezeichnet werden.

Mittels dieser wiedererkennbaren und beliebig oft erzeugbaren Struktur kann nun sehr einfach eine Zuordnung in einem informationsverarbeitenden System erfolgen. In diesem Beispiel kann die Zeichenfolge "40-90-32-90-24-90-16" einem Schlüssel vom Typ VARCHAR in einer SQL-Datenbank zugeordnet werden. Um die Struktur auf dem Touchscreen verfolgbar zu machen, so dass auch einzelne Punkte der Struktur verschwinden können, um ggf. zu einem späteren Messzyklus wieder aufzutauchen, kann es bevorzugt sein, die Struktur als Polygonschar (Fig. 1D) zu betrachten. Eine Polygonschar ist eine Menge von Polygonen. Im Minimalfall besteht ein Polygon aus 2 Punkten, sinnvoll ist es in dem Anwendungsfall erst mit 3 Punkten. Eine Polygonschar ist notwendig um die charakteristische Struktur über mehrere Messvorgänge hindurch zu verfolgen. Erst durch eine Polygonschar wird es sinnvoll möglich Informationsträger zu erkennen welche größer als der Touchscreen sind. Hierbei stellt jede Verbindung zwischen zwei Punkten eine Kante eines Polygons dar. Durch Wegfallen eines Punktes bleibt so die Struktur immer korrekt erhalten. Auch Rotation und Translation der Struktur ist ohne Einschränkung möglich. Für Rotation werden mindestens zwei Punkte der Struktur benötigt und für die Translation reicht sehr eingeschränkt sogar nur ein Punkt der Struktur aus.

In Fig. 2 wird ebenfalls die Erkennung und Zuordnung eines Informationsträgers durch einen Berührungsbildschirm dargestellt. Folgendes Verfahren lässt eine Zuordnung von Informationsträgern über eine RAW-Ansicht zu einem Datensatz zu.

Teilverfahren 1a: Der Touchcontroller prüft zwischen jedem Elektrodenpaar zyklisch eine oder mehrere elektrische Größen gemäß des jeweiligen vorliegenden kapazitiven Touchscreenaufbaus. Ergibt die Prüfung keine Veränderung der jeweils betrachteten elektrischen Größe oder Größen, so ist an dieser Stelle auf dem Touchscreen kein Einfluss durch einen Finger oder einen Informationsträger bestimmbar. In diesem Zustand bringt man den Informationsträger mit dem Touchscreen in Kontakt.

Als RAW-Ansicht oder Rohdatenansicht wird im Sinne der Erfindung insbesondere eine Form der Darstellung von gemessenen Pegeln bei Touchscreens bezeichnet ohne darauf begrenzt zu sein. Es sind weitere Auswerte- und Darstellungsverfahren neben dem Pegelprinzip denkbar, welche in gleicher oder ähnlicher Weise weiterverarbeitet werden können. Exemplarisch sollen die weiteren Ausführungen sich jedoch auf das Pegelprinzip beschränken.

Die eigentlichen Rohdaten sind die Menge der gemessenen Pegel an sich. Bei aktuellen Touchscreens sind die Elektroden üblicherweise als Matrix in Form von Zeilen und Spalten aufgebaut. Für jede Kreuzung dieser Matrix lässt sich somit ein Pegel bestimmen und dieser wird an der zugeordneten Stelle in einer, beispielsweise, aber ohne darauf beschränkt zu sein, zweidimensional geordneten, Menge als Pegelwert abgelegt. Die Gesamtheit der Pegelwerte in dieser Menge bezeichnet man insbesondere als "Rohdaten". Eine besondere Form der "Rohdaten" ist die Darstellungsform als sogenanntes Graustufenbild, da diese Menge aus Pegelwerten sehr ähnlich zu matrixbasierten Datentypen aus der digitalen Bildverarbeitung ist. Diese Darstellung wird üblicherweise in der Technik verwendet um die Menge der gemessenen Pegelwerte anschaulich darzustellen. Eine andere Bezeichnung für Rohdaten ist "RAW-Daten" und eine weitere Bezeichnung für "Rohdatensansicht" ist "RAW-Ansicht".

Bei Touchscreens, im aktuellen Stand der Technik, sind die Elektroden üblicherweise als Matrix in Form von Zeilen und Spalten aufgebaut. Dabei wird im Regelfall jeweils den Elektroden der Zeilen entweder die Rolle der Sendeelektroden oder die Rolle der Empfangselektroden zugeordnet. Den Elektroden der Spalten wird üblicherweise immer die jeweils andere Rolle zugeordnet. Die jeweilige Elektrode der Zeile und die jeweilige Elektrode der Spalte nennt man im Sinne der Erfindung insbesondere zusammen Elektrodenpaar. Zwischen den Elektrodenrollen gibt es also, im Vergleich zur Gesamtfläche der Elektroden, sehr kleine Überdeckungsflächen beider Elektroden. Die Überdeckungsfläche beider Elektroden nennt man insbesondere Kreuzungspunkt.

Durch die leitfähigen Gebiete des Informationsträgers verändert sich der Wert der elektrischen Größe zwischen den Elektroden des Touchscreens an den Stellen, an denen die leitfähige Struktur eben diese Elektroden überdeckt. Der Touchcontroller wertet diese Änderungen der elektrischen Größen für jedes Elektrodenpaar aus. Da die Elektroden als Zeilen und Spalten ausgeführt sind, kann somit eine zweidimensionale Menge von Pegeln, ähnlich einem Graustufenbild, bestimmt werden. Dieses Bild nennt man "RAW-Ansicht".

Teilverfahren 1 b: Mit dieser RAW-Ansicht ist es nun möglich einen Informationsträger zu bestimmen indem man nun die lokalen Maxima sucht und diese abhängig von ihrer Lage zueinander normiert. Ein so gefundenes Profil des Informationsträgers lässt sich wiedererkennen und auch von anderen Informationsträgern unterscheiden. Weiterhin kann eine Zuordnung von Informationsträgern über, vom Touchcontroller und/oder Betriebssystem bereit gestellten, Touchevents zu einem Datensatz erfolgen.

Teilverfahren 2a: Das Verfahren umfasst alle Schritte von Teilverfahren 1a und zusätzlich die folgenden Schritte. Der Touchcontroller und/oder das Betriebssystem findet in der RAW-Ansicht alle Stellen welche wahrscheinlich eine Fingereingabe darstellen, bestimmt für diese deren Position auf dem Display in einem Koordinatensystem und weitere Eigenschaften, wie beispielsweise, ohne darauf beschränkt zu sein, Durchmesser oder elliptische Ausdehnung. Die Menge dieser Informationen nennt man "Touchevents".

Teilverfahren 2b: Die Koordinaten dieser "Touchevents" benutzt man nun um eine Menge von Koordinaten auf dem Touchscreen zu bilden. Diese Menge ist charakteristisch für jeden Informationsträger und erlaubt somit ein Wiedererkennen und Unterscheiden von anderen Informationsträgen. Weiterhin kann vorteilhafterweise eine Zuordnung von Informationsträgern über eine Punktwolke zu einem Datensatz ausgeführt werden:

Teilverfahren 3a: Das Verfahren umfasst alle Schritte von Teilverfahren 2a und zusätzlich die folgenden Schritte. Die Menge der Koordinaten der Touchevents werden normiert indem nur ihre Lage zueinander betrachtet wird und somit die Orientierung der gesamten Menge unerheblich wird. Die normierte Lage der Koordinaten zueinander nennt man "Punktwolke".

Teilverfahren 3b: Diese Punktwolke ist nun für jeden Informationsträger charakteristisch und erlaubt somit eine Wiedererkennung und die Unterscheidung von anderen Informationsträgern. Besonders vorteilhaft ist hierbei nun, dass der Informationsträger weitgehend frei auf dem Touchscreen positioniert werden kann, da die absolute Lage der Touchevents nicht mehr relevant ist. Weiterhin kann der Informationsträger über eine Touchstruktur zu einem Datensatz zugeordnet werden:

Teilverfahren 4a: Das Verfahren umfasst alle Schritte von Teilverfahren 3a und zusätzlich die folgenden Schritte. Aus der Punktwolke wird nun ein normierter Graph gebildet. Dies geschieht entweder indem man alle Punkte zu einem Polygonzug nach einem fest definierten Verfahren verbindet oder dadurch, dass man alle Punkte zu einem freien Graphen mit tatsächlichen Kreuzungspunkten verbinden. Beide Verfahren liefern eine sogenannte Touchstruktur.

Teilverfahren 4b: Diese Touchstruktur ist charakteristisch für den Informationsträger und lässt sich somit wiedererkennen und von den Touchstrukturen, welche durch andere Informationsträger gebildet werden, unterscheiden.

Teilverfahren 5: Das Verfahren umfasst alle Schritte von Teilverfahren 4a und zusätzlich die folgenden Schritte. Zusätzlich zur Touchstruktur wird entweder jede Kombination von beispielsweise 3 Punkten zu Polygonen zusammengefasst oder es werden immer wieder beispielsweise 3 benachbarte Punkte gesucht bis alle Punkte in Polygonen, ohne sich überkreuzende Kanten, verbunden sind. Vorzugsweise besteht hierbei ein Polygon aus 3 Punkten und ist damit ein Dreieck. Damit ergibt sich überraschenderweise eine mit informationsverarbeitenden Systemen sehr effizient berechenbare Schar von Touchstrukturen, welche besonders geeignet ist um die Bewegungen eines Informationsträgers durch einen Touchscreen zu bestimmen.

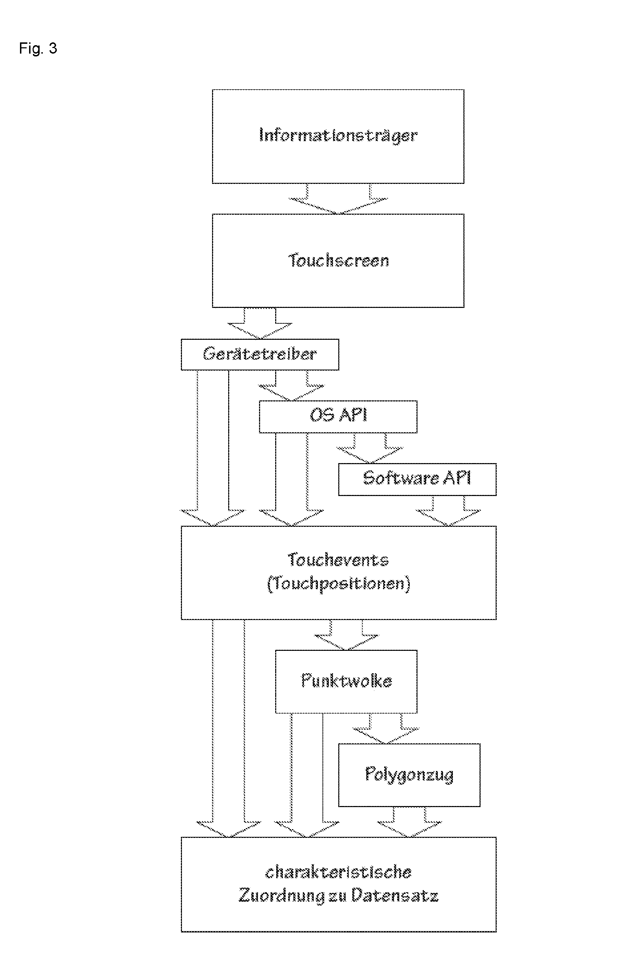

Fig. 3 zeigt den Informationsfluss einer Menge von bevorzugten Verfahren zur Zuordnung von Informationsträgern. Die physische Struktur des Informationsträgers wird hierbei durch den Touchscreen elektrisch ausgewertet. Der Touchscreen stellt dann die durch die Auswertung gewonnen Informationen über einen Gerätetreiber einem datenverarbeitenden System zur Verfügung. Hierbei können in einem der bevorzugten Fälle die Touch-Events direkt bestimmt werden. Durch Weiterverarbeiten von den Informationen des Touchscreens durch ein OS API, also einer Softwareschnittstelle des Betriebssystems, können in einem weiteren bevorzugten Fall ebenfalls die Touch-Events bestimmt werden. Des Weiteren ist es möglich auf die Informationen aus dem OS API durch ein Software API, also einer Softwareschnittstelle die durch eine Applikation zur Verfügung gestellt wird, die Touch-Events zu bestimmen. Diese Touch-Events haben bestimmte charakteristische Eigenschaften wie bspw. X-Position, Y-Position, Breite, Höhe, Ausdehnung, Durchmesser, Winkel. Diese Touch-Events können ab diesen Punkt des Verfahrens in einer bevorzugten Form direkt zu einer charakteristischen Zuordnung gebracht werden, oder in einer anderen bevorzugten Ausführung zu einer Punktwolke zusammengefasst werden um damit eine charakteristische Zuordnung zu generieren. Diese Punktwolke wird in einer weiteren bevorzugten Ausführung zusätzlich zu einem Polygonzug verknüpft um damit ebenfalls eine charakteristische Zuordnung zu generieren.

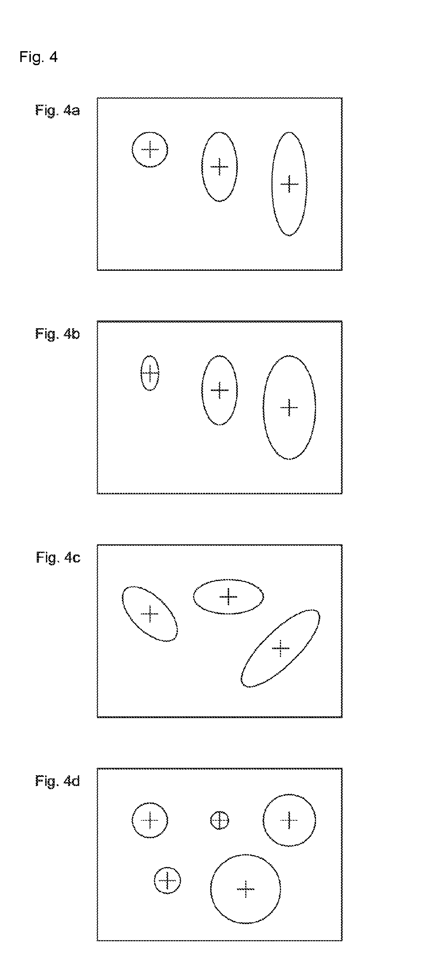

Fig. 4a bis Fig. 4d zeigen die ermittelten absoluten Touchpositionen von vier verschiedenen Informationsträgern mit den zusätzlich ermittelten weiteren Eigenschaften wie Durchmesser und elliptischer Ausdehnung.

Dabei sind 4a und 4b fast identisch, unterscheiden sich jedoch in der Ausprägung des leitfähigen Bereichs an der ersten ermittelten Touchposition. Dieser Unterschied in der elliptischen Ausdehnung macht die beiden Informationsträger, welche identische Touchpositionen abbilden, dennoch unterscheidbar.

Fig. 4c zeigt einen Informationsträger mit unterschiedlichen elliptischen Ausdehnungen der ermittelten absoluten Touchpositionen. Beachtenswert sind außerdem die gleichen elliptischen Ausdehnungen der ersten und der zweiten ermittelten Touchposition, welche sich jedoch in ihrem ermittelten Winkel unterscheiden.

Fig. 4d zeigt einen Informationsträger mit unterschiedlichen Durchmessern der ermittelten absoluten Touchpositionen.

Die so ermittelten weiteren Eigenschaften können genutzt werden um Rückschlüsse über die Qualität des Lesevorgangs zu ziehen. Falls man davon ausgeht, dass alle Touchpositionen von identischen kreisförmigen leitfähigen Gebieten erzeugt wurden, so kann man auf Grund der Unterschiede in den weiteren Eigenschaften der absoluten Touchpositionen, resultierend aus den eigentlich gleichförmigen leitfähigen Gebieten, darauf schließen, dass das Ermitteln der absoluten Touchpositionen fehlerbehaftet war.

Darüber hinaus können die weiteren Eigenschaften z.B. zur Kodierung genutzt werden. Eine solche Kodierung kann beispielsweise und ohne darauf beschränkt zu sein realisiert werden, indem jeder Touchpunkt einer von zwei möglichen Formen genügt. Beide Formen sind beispielsweise Ellipsen deren Ausdehnung doppelt so lang wie breit ist. Die beiden Formen unterscheiden sich dadurch, dass die Längsachse der ersten Form 45° nach links zur Orientierung des Informationsträgers ausgerichtet ist und die Längsachse der zweiten Form 45° nach rechts zur Orientierung des Informationsträgers ausgerichtet ist. Somit können über die Veränderung der Form eines Touchpunktes überraschenderweise weitere Informationen kodiert werden.

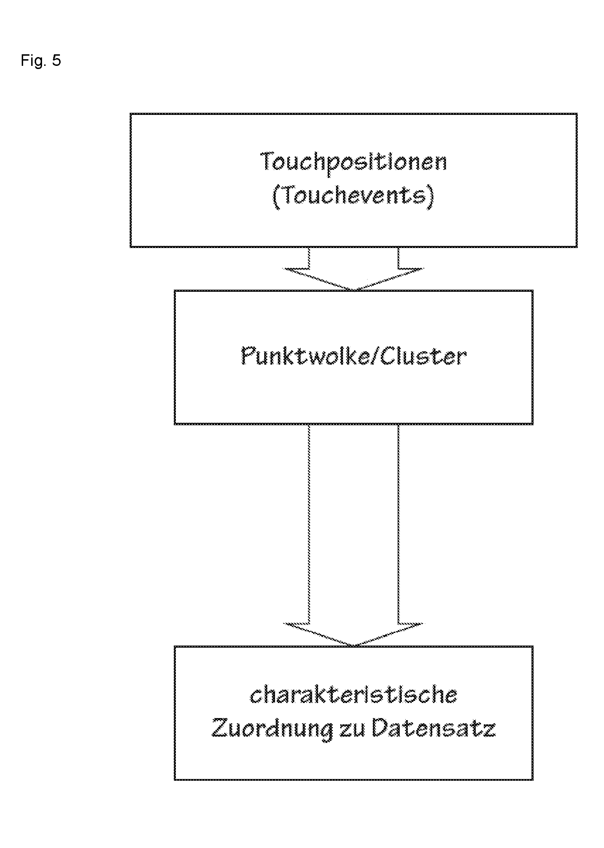

Fig. 5 zeigt eine Variante für eine charakteristische Zuordnung von Touchevents zu einem Datensatz. Ein bevorzugtes Verfahren um aus einer Punktwolke eine charakteristische Zuordnung zu bestimmen ist, für jedes Paar von Punkten aus der Punktwolke den Abstand zu bestimmen, jeden dieser Abstände in eine Liste aufzunehmen und diese Liste der Größe der Abstände nach zu sortieren um damit ein charakteristisches Profil zu bilden. Dieses Profil ist, unabhängig von der Rotation der Punktwolke, immer charakteristisch für diese Punktwolke. Die Abstände in der Liste von Abständen werden im speziellen Fall zusätzlich auf den größten Abstand normiert um auch eine Unabhängigkeit von der Skalierung der Punktwolke zu erreichen. Da dieses Profil charakteristisch für eine Punktwolke ist und eine Punktwolke charakteristisch für einen Informationsträger ist, so ist das Profil auch charakteristisch für den Informationsträger. Bildet man das charakteristische Profil von zwei nichtidentischen Informationsträgern, so können diese anhand ihres jeweiligen charakteristischen Profils unterschieden werden. Ebenso werden zwei identische Informationsträger wegen ihrem gleichen charakteristischen Profil gleichermaßen wiedererkannt.

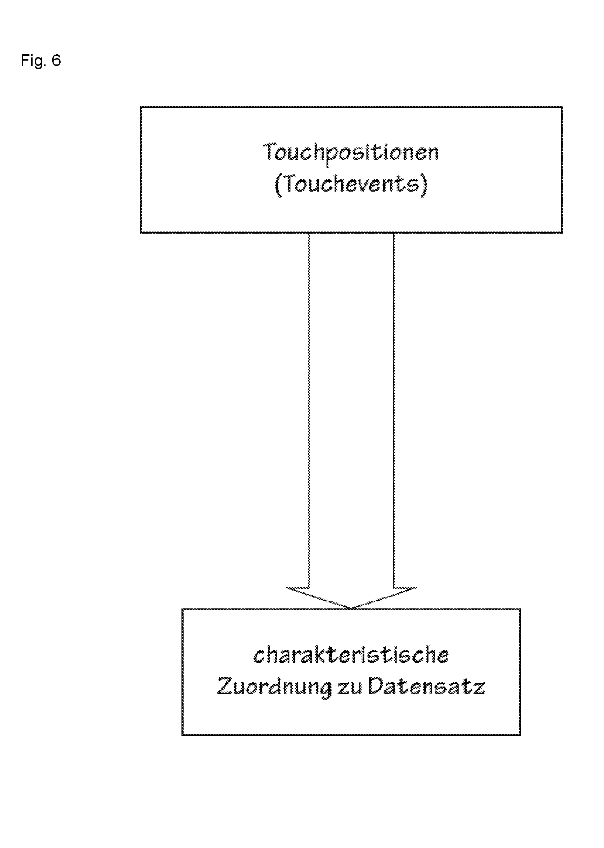

Fig. 6 zeigt eine weitere bevorzugte Variante zur Generierung der charakteristischen Zuordnung. Ein Verfahren direkt aus den vom Gerätetreiber, der OS API oder der Software API gelieferten Touchpositionen eine charakteristische Zuordnung zu einem Datensatz zu generieren ist, den Informationsträger exakt und wiederholbar auf dem Touchscreen zu Positionieren. Die so gelieferten Touchpositionen können über eine Datenbank immer wieder dem Informationsträger zugeordnet werden.

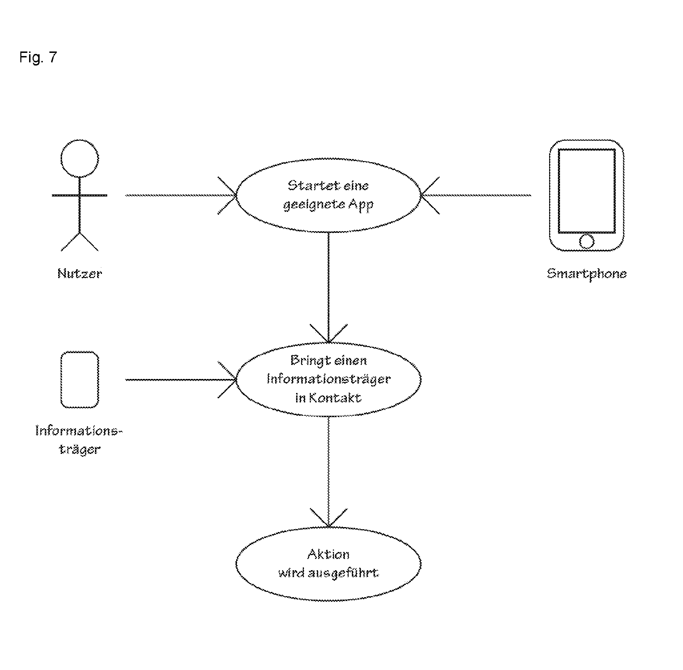

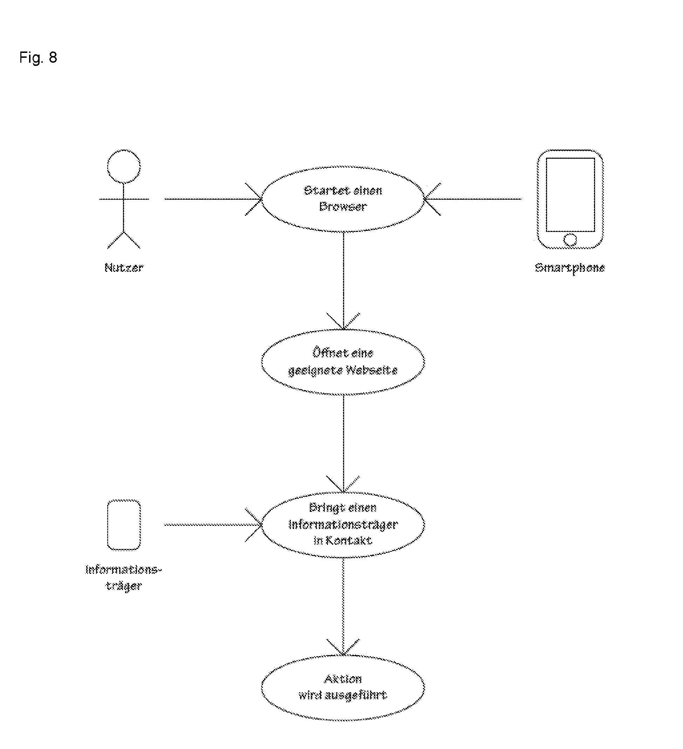

Fig. 7 und Fig. 8 zeigen Use-Cases der vorliegenden Erfindung, wie diese in der Praxis angewendet werden. Das sind z.B. eine Kombination einer Applikation (Fig. 7) bzw. eines Browsers (Fig. 8) und eines Informationsträgers. Ein Benutzer aktiviert auf einem Gerät, welches einen Berührungsbildschirm aufweist, eine Applikation oder ein Programm oder einen Browser. Die Applikation (App), die auch als Anwendung bezeichnet werden kann, oder der Browser erwarten nach dem erfolgreichen Starten zu diesem Zeitpunkt eine weitere Eingabe. Die weitere Eingabe kann beispielsweise durch einen Informationsträger erfolgen, der mit dem Berührungsbildschirm in Kontakt gebracht wird und durch eine kapazitive Wechselwirkung eine Aktion ausführt, wobei die Software API, OS API oder der Gerätetreiber genutzt wird, um den Informationsträger einem Datensatz in einem informationsverarbeitenden System zuzuordnen.

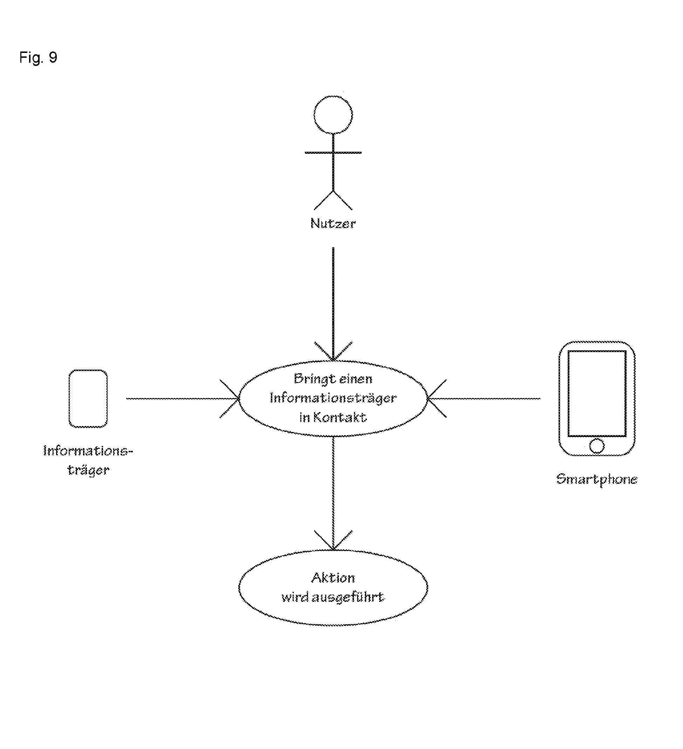

Fig. 9 zeigt die Aktivierung einer Aktion durch eine Kombination des Berührungsbildschirm beinhaltenden Geräts mit einem Informationsträger. Es kann weiterhin vorteilhaft sein, wenn ein Benutzer Zugang zu einer Applikation, einem Browser oder einer Aktion erhält, wenn der Benutzer den Informationsträger mit dem Berührungsbildschirm in Kontakt bringt.

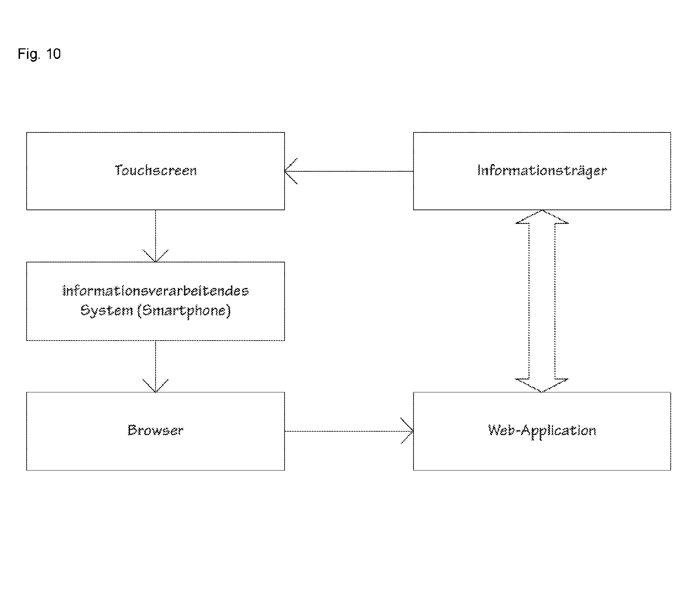

Fig. 10 zeigt einen Aspekt der technischen Lösung der Zuordnung von physischen Informationsträgern zu Werten in einer Applikation, bspw. einer sog. Web-Application (wechselseitiger Pfeil). Hierbei wird über den physischen Mittler Touchscreen oder Berührungsbildschirm, dem informationsverarbeiten System (z. B. einem Smartphone) und dem Software API eines Browsers, bspw. eine Javascript Umgebung, einer Web-Application die physische Zuordnung des Informationsträger zur Verfügung gestellt (Pfeilkette).

## Patentansprüche

1. Verfahren zur Erkennung von einem oder mehreren elektrisch leitfähigen Gebieten eines oder mehrerer Informationsträger, umfassend die folgenden Schritte:
a. Wenigstens bereichsweise in Kontakt bringen der leitfähigen Gebiete einer ersten Fläche eines oder mehrerer Informationsträger mit einer zweiten Fläche eines Berührungsbildschirms,
b. Auslösen von einem oder mehreren Touch-Events durch in Kontakt bringen gemäß (a) und
c. Ermitteln der Positionen, Orientierungen und/oder Ausdehnungen der Touch-Events.

2. Verfahren zur Erkennung von einem oder mehreren elektrisch leitfähigen Gebieten eines oder mehrerer Informationsträger, umfassend die folgenden Schritte:
a. Wenigstens bereichsweise in Kontakt bringen der leitfähigen Gebiete einer ersten Fläche eines oder mehrerer Informationsträger mit einer zweiten Fläche eines Berührungsbildschirms,
b. Beeinflussung der elektrischen Größen des Berührungsbildschirms durch die leitfähigen Gebiete des Informationsträgers,
c. Auswertung der Rohdaten, RAW-Ansicht und/oder einer Matrix mit Pegeln aus der hervorgerufenen Beeinflussung.

3. Verfahren nach Anspruch 1 oder 2, wobei die Positionen, Orientierungen und/oder Ausdehnungen der Touch-Events zu einer Menge zusammengefasst werden.

4. Verfahren nach Anspruch 3, wobei eine Punktwolke aus den Positionen, Orientierungen und/oder Ausdehnungen der Touch-Events in Relation zueinander gebildet wird.

5. Verfahren nach einem oder mehreren der vorherigen Ansprüche, wobei aus den Positionen, Orientierungen und/oder Ausdehnungen der Touch-Events ein Polygonzug gebildet wird.

6. Verfahren nach einem oder mehreren der vorherigen Ansprüche, wobei der Polygonzug, die Menge der Touch-Events oder die Punktwolke einem Datensatz in einem informationsverarbeitenden System zugeordnet werden.

7. Verfahren nach einem oder mehreren der vorherigen Ansprüche, wobei die Touch-Events mittels Gerätetreiber, OS API und/oder Software API ermittelt werden.

8. Verfahren nach einem oder mehreren der vorherigen Ansprüche, wobei die Touch-Events mittels Software in einem Software API ermittelt werden.

9. Verfahren nach einem oder mehreren der vorherigen Ansprüche, wobei die Touch-Events mittels Software in einem OS API ermittelt werden.

10. Verfahren nach einem oder mehreren der vorherigen Ansprüche, wobei die Touch-Events mittels Software durch einen Gerätetreiber ermittelt werden.

11. Verfahren nach einem oder mehreren der vorherigen Ansprüche, wobei die leitfähigen Gebiete in weniger als 30 Sekunden, bevorzugt kleiner 10 Sekunden und besonders bevorzugt kleiner 1 Sekunde erfasst werden.

12. Verfahren nach einem oder mehreren der vorherigen Ansprüche, wobei die ausgelösten Touch-Events mit Informationen wie X-Position, Y-Position, Breite, Höhe, Ausdehnung, elliptischer Ausdehnung, Durchmesser, Druck und Winkel durch deren Kombination für Kodierung, Korrektur und/oder Charakterisierung der Informationsträger genutzt werden.

13. Verfahren nach einem oder mehreren der vorherigen Ansprüche, wobei das den Berührungsbildschirm beinhaltende Gerät ausgewählt ist aus der Gruppe umfassend Smartphones, Handys, Displays, Tablet-PCs, Tablet-Notebooks, Touchpad-Geräte, Grafiktabletts, Fernseher, PDAs, mobile Musikabspielgeräte und Eingabegeräte.

14. Verfahren nach einem oder mehreren der vorherigen Ansprüche, wobei die Anordnung der leitfähigen Gebiete einem Datensatz in einem informationsverarbeitenden System zugeordnet wird.

15. Verfahren nach einem oder mehreren der vorherigen Ansprüche, wobei die Anordnung der leitfähigen Gebiete alleine und/oder in Kombination mit Informationen im OS API in einem informationsverarbeitenden System Aktionen auslöst.
